# EUROPEAN PATENT SPECIFICATION

(11) **EP 0 645 262 B1**
(45) Date of publication and mention of the grant of the patent: **11.03.1998**
(21) Application number: 94114720.9
(22) Date of filing: 19.09.1994
(51) Int. Cl.: B60B 33/00

(54) **Device for preventing the penetration of foreign matters and allowing the application and retention of lubricant in self-orientating twin castors**
Vorrichtung gegen das Eindringen von Fremdkörpern und Anwendung und Behaltung von Schmiermitteln in selbstorientierenden Zwillingslaufrollen
Dispositif contre la pénétration d'impuretés et permettant l'application et la rétention de lubrifiant dans des roulettes doubles à pivot à auto-orientation

(30) Priority: 24.09.1993 IT BO930202 U
(43) Date of publication of application: 29.03.1995
(73) Proprietor: EMILSIDER MECCANICA S.p.A., I-40057 Cadriano di Granarolo Emilia (Prov. Bologna) (IT)
(72) Inventor: Melara, Francescantonio, I-40100 Bologna (IT)
(74) Representative: Modiano, Guido, Dr.-Ing.

(56) References cited:
- EP-A- 0 386 956
- EP-A- 0 458 446
- AU-B- 516 597
- DE-A- 2 836 404
- DE-A- 3 808 185
- DE-U- 9 316 374
- GB-A- 1 219 103
- GB-A- 2 025 220

## Description

The present invention relates to a device for preventing the penetration of foreign matters and for allowing the application and retention of lubricant in self-orientating twin castors of the type comprising a pair of coaxial wheels.

So-called twin castors are constituted by a pair of wheels which are rotatably mounted on a spindle but axially retained by annular ridges that engage grooves of the spindle. The spindle is driven through a supporting seat constituted by a vertical wall lying between the wheels and by a sort of semicylindrical hood that covers the wheels in their upper region. A cylindrical recess is formed in the vertical wall, is open in the upper region, and acts as a rotation seat for a vertical self-orientation stem to be inserted and fixed in a seat of the piece of furniture to which the castor is to be applied.

Two tubular portions extend from both sides of the wall and are coaxial to the spindle; the opposite ends of said spindle extend into said portions. Said portions are optionally internally provided with engagement elements in order to axially retain the wheels. Said engagement elements are constituted by semicircular teeth behind which a flange engages; said flange is externally provided on a boss which is rigidly coupled to the respective wheel. The boss in practice acts as a bearing for the rotary support of the wheel on the spindle. In some embodiments, the tubular portions are constituted by a series of axial tabs which have, at their ends, teeth which are directed inwardly to engage the flange of the wheels. Some types of twin castor, meant to be mounted on chairs, are of the self-braking type in order to keep the chair in position when the user is about to sit thereon. In these castors, the spindle supporting seat is vertically oblong, and the braking effect is achieved by means of a spring accommodated in a blind recess formed in the thickness of the vertical wall and opening at the top of the seat. The spring, which is inserted in the blind recess through a lower through bore and the spindle seat, is strong enough to produce, when only the weight of the seat bears on the castor, a thrust on the spindle that moves said spindle into a position in which the bosses of the wheels are in sliding contact within the tubular portions, which prevent their rotation.

Twin castors of the above type are disclosed in European publications no. 386 956 and 458 446 and in British patent no. 2,025,220.

In known twin castors there is the drawback that dirt, dust, hairs and other matter penetrates in the wheel rotation region during use, hindering the rotation of the wheels until they jam and possibly causing unpleasant creaking. However, cleaning the rotation region to remove the causes of the jamming and creaking of the wheels is hindered by the difficulty in disassembling the wheels, due to the presence of snap-together couplings that require the forced extraction of the wheels and can damage them.

Currently, in order to release the castors and avoid creaking the user resorts to the application of lubricant; since the supporting region cannot be accessed, said lubricant is injected indiscriminately, with the risk that said lubricant, by dripping, may then damage the rolling surface, i.e. floors, moquette, and carpets. In European publications no. 386 956 and 458 446, the tubular portions that extend from the spindle supporting wall also act, to a certain extent, as a barrier against the leakage of lubricant, but their effectiveness is very modest, especially when a tendentially fluid lubricant is used.

Finally, AU-B-516 597 and DE-A-3 808 185 disclose the use of a plug or cover element for covering a lower aperture of a support body in a two-wheeled castor.

The principal aim of the present invention is to provide a device to be mounted on twin castors to allow the application of lubricant and prevent its accidental leakage.

Within the scope of this aim, an object of the present invention is to provide a device that helps to improve the seal of the castor hub, i.e. of the wheel rotation region, against the penetration of foreign matter.

In accordance with the invention, there is provided a device for preventing the penetration of foreign matter and for allowing the application and retention of lubricant in self-orientating twin castors as defined in the appended claim 1. The appended dependent claims define further technical features of the invention.

The particular characteristics and advantages of the present invention will become apparent from the following description on the basis of the accompanying drawings, wherein:
figure 1 is a vertical sectional view, taken along the plane I-I of figure 2, of a twin castor that includes the device according to the invention;
figure 2 is a side view, taken along the plane II-II of figure 1, of the castor of figure 1 after a wheel has been removed;
figure 3 is a view, similar to figure 1, which however partially shows the tubular portions;
figure 4 is a sectional view, taken along the plane IV-IV of figure 5, of a different embodiment;
figure 5 is a lateral sectional view, taken along the plane V-V of figure 4, of the different embodiment;
figures 6, 7, and 8 are respectively a perspective view and sectional views of the closure means, taken along the planes VII-VII and VIII-VIII of figure 6;
figures 9 and 10 are sectional views of different embodiments of the closure means.

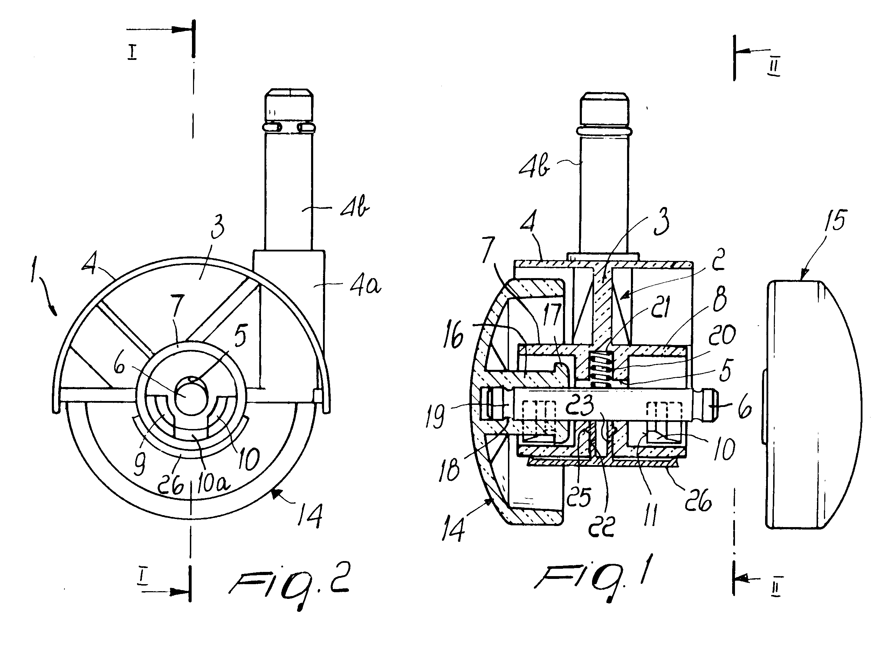

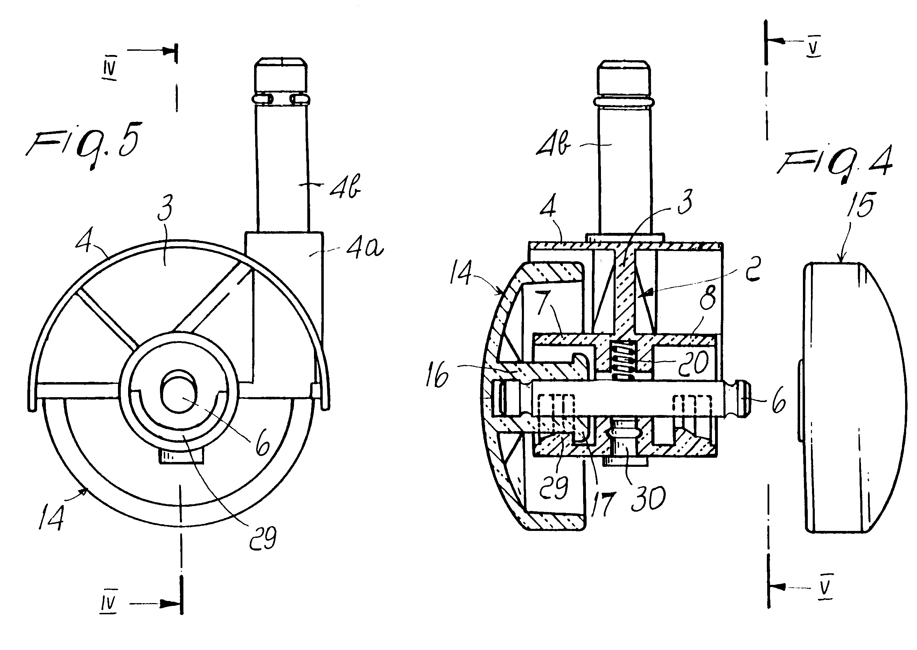

With reference to figures 1-3 and 6-8, the reference numeral 1 generally designates a conventional twin castor of the self-braking type. Said castor comprises a support 2 which is formed monolithically, for example by molding plastics or metal, and is composed of a substantially semicircular vertical wall 3 on the upper profile whereof there is a semicylindrical hood 4. A hollow expansion 4a is formed in the wall 3 and forms a recess that constitutes the seat for a vertical stem 4b by means of which the castor is fitted to a piece of furniture.

A vertically elongated through bore 5 is formed at the center of the lower edge of the wall 3 and constitutes the supporting seat for a spindle 6 driven through it.

Two coaxial tubular portions 7 and 8 protrude outwardly concentrically with respect to the bore 5, on opposite sides of the wall 3, and their length is such that they remain within the volume occupied by the hood 4.

Two arc-like externally chamfered teeth 9 and 10 are formed inside each tubular portion 7 and 8 and form shoulders 11 which are spaced from the vertical wall 3. A ridge 10a lies between the teeth of each pair and forms a barrier against the leakage of lubricant from the ends of the tubular portions. Since the shoulders 11 form recesses which would prevent, during molding, the extraction of the forming mold that internally shapes the tubular portions 7 and 8, slots 12 and 13 are formed in the regions of said tubular portions that lie between the teeth 9 and 10 and the wall 3 and allow to insert and remove the inserts of the mold that form the shoulders 11 (see figure 3).

Two wheels 14 and 15 are rotatably mounted on the opposite ends of the spindle 6 and are sized so that they are peripherally covered by the hood 4.

Each wheel comprises a hollow boss 16 which ends with an external annular flange 17 and is internally provided with an annular ridge 18 that is suitable to engage, by forcing, in a respective annular groove 19 formed at the end of the spindle 6. The forcing of the ridges 18 in the grooves 19 simultaneously causes the engagement of the flanges 17 behind the shoulders 11. In this manner, there is a double axial retention of the wheels and thus greater safety against their accidental extraction.

The braking effect of the castor 1 is produced by the sliding of the bosses 16 on the teeth 9 and 10. In order to allow this braking effect when the castor is idle, i.e. when it is not loaded, there is a spring 20 which, by pressing vertically on the spindle 6, pushes the bosses 16 of the wheels into contact on the teeth 9 and 10. The height of the flanges 17 is of course smaller than that of the shoulders 11, to avoid the tangent contact of the flanges 17 with the internal surface of the tubular portions 7 and 8, which would not be sufficient to keep the wheels 14 and 15 braked in case of tangent stresses. The spring 20 is accommodated in a recess 21 that is formed in the thickness of the wall 3 and ends in the seat 5 above the spindle 6. A through bore 22 is aligned with said recess 21, is open downwardly, and is formed below the spindle 6. The bore 22 has the purpose of allowing to mount the spring 20 in the recess 21 before the spindle 6 is inserted in the seat 5. With a twin castor of the described type, rolling difficulties may occur as a consequence of the penetration of dirt or other foreign matter in the wheel supporting region, thus hindering the free rotation of said wheels.

According to the present invention, a device is provided that prevents the penetration of foreign matter in the castor and allows to apply and retain a lubricant in the supporting region, preventing the applied lubricant from leaking out by seepage and dirtying the castor rolling surface.

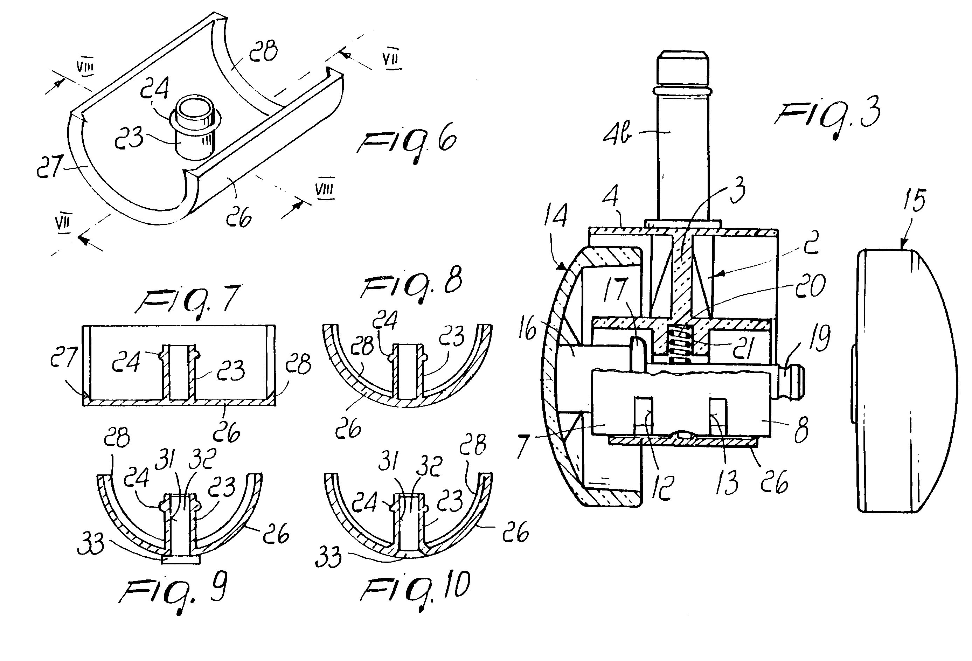

Said device is constituted by a plug 23 (see also figures 6, 7, and 8) which is inserted by pressing in the bore 22 and is axially locked by the engagement of an outer collar 24 of said plug in a corresponding groove 25 of the bore 22.

A laminar element, curved so as to form a cylindrical sector 26 whose radius of curvature corresponds to the radius of curvature of the tubular portions 7 and 8 and whose length is less than the overall length of said tubular portions but greater than the distance between the slots 12 and 13, is rigidly coupled to the plug 23. The opposite ends of the cylindrical sector 26 have ridges 27, 28 which run along the inner edges and protrude from the concave surface of the sector. In this way, when the plug 23 is inserted in the bore 22, the ridges 27 and 28 rest on the outer surface of the tubular portions 7 and 8 at the regions that lie between the opposite ends of the tubular portions 7 and 8 and the slots 12 and 13, producing a narrow interspace or tray where the lubricant applied to the rotation region of the wheels 14 and 15 may collect if it seeps through the slots 12 and 13.

The described invention is susceptible to numerous modifications and variations, all of which are within the scope of the same inventive concept.

Figures 4 and 5 illustrate an embodiment in which the tubular portions 7 and 8 have no slots, since the teeth that axially retain the wheels are lower and thus can be produced according to a technique that does not entail the adoption of inserts but uses the elasticity of the material (molecular memory) to allow the extraction of the mold from the inside of the tubular portions.

In this embodiment, the teeth form an optionally circular ridge 29 that forms a barrier which prevents the lubricant from leaving from the opposite ends of the tubular portions, whereas a simple plug 30, identical to the plug 23, is provided to close the bore 22. In some cases (see figures 9 and 10) it may be convenient to provide, in the plug 23, a channel 31 that passes fully through it axially and is meant to receive a pin 32 provided with a head 33. The purpose of said pin is to prevent the ridge 24 from narrowing and leaving the groove 25, ensuring perfect retention of the plug 23 in the bore 22.

It should be noted that in the embodiment of figure 10, the head 33 of the pin is conical, so that it can be accommodated within a flared portion of the cylindrical sector. Likewise, the plug of figure 4 can also have a conical head to be recessed in a flared portion of the wall 3.

It is evident that the device according to the invention perfectly achieves the intended aim and objects. In particular, it prevents the formation of cloggings that can jam the rotation of the castors and allows to lubricate the supporting region and to trap any seepage on the castor rolling surface.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. Device for preventing the penetration of foreign matter and for allowing the application and retention of lubricant in self-orientating twin castors constituted by a pair of wheels (14,15) which are rotatably mounted on a spindle (6) driven through a seat (5) of a support (2) which is composed of a vertical wall (3) lying between said wheels and in which a vertical cylindrical recess (4a) is formed, said recess (4a) being open upwards for the rotational engagement of a stem (4b) for mounting the castor on a piece of furniture, two tubular portions (7, 8) being rigidly coupled to the opposite sides of said wall and being coaxial to said spindle (6), tubular bosses (16) rigidly coupled to the respective wheels protruding into said tubular portions, a vertical blind recess (21) being furthermore formed in said wall and opening into said seat (5) above said spindle (6), a through bore (22) being also provided in said wall and being aligned with said blind recess (21) below said spindle (6), a spring (20) being accommodated in said recess (21) and acting on said spindle (6); characterized in that a lubricant is provided in the supporting region between the bosses (16) of the wheels and the tubular portions (7, 8) of the support (2) and in that it further comprises means for preventing the leakage of lubricant through said tubular portions (7, 8) including means for closing said bore (22) and a ridge (10a, 29) that extends inside the opposite ends of said tubular portions (7, 8) below said spindle (6) and between teeth (9, 10) for retaining the wheels (14, 15).

2. Device according to claim 1, characterized in that said means for closing said bore comprise a plug (23) having an annular external collar (24) that is adapted to engage in an annular groove (25) of said bore (22).

3. Device according to any one or more of the preceding claims for castors in which the tubular portions (7, 8) have slots (12, 13) for the extraction of inserts for forming the teeth (9, 10) for retaining the wheels (14, 15), characterized in that a cylindrical sector (26) whose radius of curvature corresponds to the radius of curvature of said tubular portions (7, 8) is rigidly coupled to said plug (23), the opposite ends of said sector (26) having ridges (27, 28) which, when said plug (23) is inserted in said bore (22), rest so as to produce a seal on the outer surface of said tubular portions (7, 8), forming a tray for collecting any seepage of lubricant from the rotation region through said slots (12, 13).

4. Device according to claim 2, characterized in that said plug (23) has a through channel (31) in which a closing pin (32) is inserted.

5. Device according to claim 4, characterized in that said pin (32) has a conical head (33) which is suitable to engage in a corresponding flared portion of said cylindrical sector (26).

## Patentansprüche

1. Vorrichtung zum Verhindern des Eintritts von Fremdkörpern und zum Einbringen und Halten von Schmiermittel in selbstorientierenden Zwillingslaufrollen mit zwei drehbaren Rädern (14, 15) auf einer Spindel (6), die durch einen Sitz (5) einer Lagerung (2) getrieben ist, welche aus einer vertikalen Wand (3) zwischen den Rädern mit einer vertikalen zylindrischen, nach oben offenen Aufnahme (4a) zum Dreheingriff mit einem Schaft (4b) zum Befestigen der Laufrollen an einem Möbelstück besteht, wobei in zwei zu der Spindel (6) koaxiale und starr mit den beiden Seiten der Wand verbundene Rohrteile (7, 8) starr mit dem jeweiligen Rad verbundene Rohrstutzen (16) hineinragen, ein vertikales Sackloch (21) in der Wand ausgebildet und zu dem Sitz (5) über der Spindel (6) offen ist, eine Durchbohrung (22) in der Wand vorgesehen und auf das Sackloch (21) unter der Spindel (6) ausgerichtet ist und eine in dem Sackloch (21) sitzende Feder (20) auf die Spindel (6) einwirkt, dadurch **gekennzeichnet**, daß ein Schmiermittel in dem Lagerbereich zwischen den Rohrstutzen (16) der Räder und den Rohrteilen (7, 8) der Lagerung (2) vorgesehen ist, und daß ferner Mittel zum Verhindern des Austritts des Schmiermittels durch die Rohrteile (7, 8) in Form eines Verschlusses der Durchbohrung (22) und eines Sieges (10a, 29) vorgesehen sind, der in den einander abgewandten Enden der Rohrteile (7, 8) unter der Spindel (6) zwischen Zähne (9, 10) zum Halten der Räder (14 15) ragt.

2. Vorrichtung nach Anspruch 1, dadurch **gekennzeichnet**, daß zum Verschluß der Durchbohrung ein Stopfen (23) mit einem ringförmigen Umfangssteg (24), der in eine Ringnut (25) in der Durchbohrung (22) eingreift, vorgesehen ist.

3. Vorrichtung nach einem oder mehreren der vorhergehenden Ansprüche für Laufrollen, deren Rohrteile (7, 8) Schlitze (12, 13) zum Herausziehen von Einsätzen haben, die die Zähne (9, 10) zum Halten der Räder (14, 15) bilden, dadurch **gekennzeichnet**, daß ein zylindrischer Sektor (26), dessen Krümmungsradius dem Krümmungsradius der Rohrteile (7, 8) entspricht, starr mit dem Stopfen (23) verbunden ist und an seinen einander abgewandten Enden Rippen (27, 28) hat, die bei in die Durchbohrung (22) eingesetztem Stopfen (23) unter Bilden einer Dichtung an der Außenfläche der Rohrteile (7, 8) anliegen und eine Schale zum Sammeln jeglichen aus dem Drehbereich durch die Schlitze (12, 13) hindurch ausgetretenen Schmiermittels bilden.

4. Vorrichtung nach Anspruch 2, dadurch **gekennzeichnet**, daß der Stopfen (23) einen Kanal (31) enthält, in den ein Verschlußstift (32) eingesetzt ist.

5. Vorrichtung nach Anspruch 4, dadurch **gekennzeichnet**, daß der Stift (32) einen konischen Kopf (33) hat, der in einem entsprechend angesenkten Teil des zylindrischen Sektors (26) sitzt.

## Revendications

1. Dispositif pour empêcher la pénétration d'impuretés et pour permettre l'application et la rétention de lubrifiant dans des roulettes doubles auto-orientables constituées par une paire de roues (14,15) qui sont montées à rotation sur un arbre (6) entraîné au travers d'un siège (5) d'un support (2) qui est composé d'une paroi verticale (3) disposée entre lesdites roues et dans laquelle un renfoncement cylindrique vertical (4a) est formé, ledit renfoncement (4a) s'ouvrant vers le haut pour l'engagement à rotation d'une tige (4b) pour le montage de la roulette sur un élément de mobilier, deux portions tubulaires (7, 8) étant accouplées rigidement aux cotés opposés de ladite paroi et étant coaxiales audit axe (6), des bossages tubulaires (16) accouplés rigidement aux roues respectives faisant saillie dans lesdites portions tubulaires, un renfoncement borgne vertical (21) est en outre formé dans ladite paroi et débouchant dans ledit siège (5) au-dessus dudit axe (6), un trou traversant (22) étant également prévu dans ladite paroi et étant aligné avec ledit renfoncement borgne (21) en dessous dudit axe (6), un ressort (20) étant reçu dans ledit renfoncement (21) et agissant sur ledit axe (6) ; caractérisé en ce qu'un lubrifiant est prévu dans la région de support entra les bossages (16) des roues et les portions tubulaires (7, 8) du support (2), et en ce qu'il comprend en outre des moyens pour empêcher la fuite de lubrifiant à travers lesdites portions tubulaires (7, 8) incluant des moyens pour fermer ledit trou (22) et une nervure (10a, 29) qui s'étend à l'intérieur des extrémités opposées desdites portions tubulaires (7, 8) en dessous dudit axe (6) et entre des dents (9, 10) pour retenir les roues (14, 15).

2. Dispositif selon la revendication 1, caractérisé en ce que lesdits moyens pour fermer ledit trou comprennent un bouchon (23) ayant un collier annulaire externe (24) adapté pour s'engager dans une gorge annulaire (25) dudit trou (22).

3. Dispositif selon une ou plusieurs des revendications précédentes pour des roulettes dans lesquelles les portions tubulaires (7, 8) ont des fentes (12, 13) pour l'extraction d'inserts pour former les dents (9, 10) pour retenir les roues (14, 15), caractérisé en ce qu'un secteur cylindrique (26) dont le rayon de courbure correspond au rayon de courbure desdites portions tubulaires (7, 8) est accouplé rigidement audit bouchon (23), les extrémités opposées dudit secteur (26) possédant des nervures (27, 28) qui, lorsque ledit bouchon (23) est inséré dans ledit trou (22), sont en appui de façon à produire une étanchéité sur la surface externe desdites portions tubulaires (7, 8), formant un tiroir pour collecter toute fuite de lubrifiant depuis la région de rotation à travers lesdites fentes (12, 13).

4. Dispositif selon la revendication 2, caractérisé en ce que ledit bouchon (23) possède un canal traversant (31) dans lequel est insérée une goupille de fermeture (32).

5. Dispositif selon la revendication 4, caractérisé en ce que ladite goupille (32) possède une tête conique (33) qui est apte à s'engager dans une portion évasée correspondante dudit secteur cylindrique (26).
